# EUROPEAN PATENT APPLICATION

(11) **EP 4 757 004 A1**
(43) Date of publication of application: **10.06.2026**
(21) Application number: 25854559.9
(22) Date of filing: 25.07.2025
(51) Int. Cl.: H01M 10/6556, H01M 10/613, H01M 50/204

(54) **COOLING DEVICE AND BATTERY PACK INCLUDING SAME**

(30) Priority: 16.08.2024 KR 20240109828
(71) Applicant: LG Energy Solution, Ltd., Seoul 07335 (KR)
(72) Inventor: LEE, Jae Hyun, Daejeon 34122 (KR); KIM, Young Man, Daejeon 34122 (KR); HAN, Nyeon Gu, Daejeon 34122 (KR); KIM, Ki Young, Daejeon 34122 (KR)
(74) Representative: Plasseraud IP
(86) International application number: PCT/KR2025/011101
(87) International publication number: WO 2026/038750

(57) **Abstract**

A cooling device according to some embodiments includes: a heat sink including a plurality of cooling channels extending in a first direction and spaced apart from each other in a second direction perpendicular to the first direction and a plurality of hollows extending in the first direction and spaced apart from each other in the second direction; and
a block coupled to the heat sink, wherein
the block includes a plurality of first holes and a plurality of second holes on a side near the heat sink and on a side far from the heat sink, wherein
each of the plurality of first holes overlaps a corresponding one of the plurality of cooling channels in the first direction, and
each of the plurality of second holes overlaps a corresponding one of the plurality of hollows in the first direction, and
each of the plurality of cooling channels includes two or more sub-channels.

Some embodiments of the present disclosure can rapidly cool the battery. Accordingly, the stability of the battery can be enhanced, and rapid charging of the battery can be enabled.

## Description

### [Technical Field]

The present disclosure relates to a cooling device and a battery pack including the same.

This application claims the benefit of priority to Korean Patent Application No. 10-2024-0109828, filed on August 16, 2024, and the entire contents of Korean Patent Application No. 10-2024-0109828 are hereby incorporated by reference.

### [Background]

Interest in secondary batteries, which enable long-term repeated use through recharging, is growing to reduce dependence on fossil fuels and decrease carbon emissions. Secondary batteries are used in various fields such as vehicles, portable electronic devices, and ESS (Energy Storage Systems). Therefore, various technologies to enhance the safety of secondary batteries are being researched. Particularly, if a thermal runaway event occurs in a secondary battery, it can lead to major accidents such as fires and explosions. Therefore, the operating temperature of secondary batteries must be maintained at an appropriate level. Furthermore, if the operating temperature of a secondary battery exceeds the appropriate level, it negatively impacts performance aspects such as the battery's lifespan and capacity. Consequently, extensive research is being conducted on cooling technologies for secondary batteries.

### [Summary]

### [Technical Problem]

The technical problem addressed by the technical concept of the present disclosure is to provide a battery cooling technology.

### [Technical Solution]

Some embodiments of the present disclosure that can solve the above problem are as follows.

A cooling device according to some embodiments includes: a heat sink including a plurality of cooling channels extending in a first direction and spaced apart from each other in a second direction perpendicular to the first direction and a plurality of hollows extending in the first direction and spaced apart from each other in the second direction; and a block coupled to the heat sink, wherein the block includes a plurality of first holes and a plurality of second holes on a side near the heat sink and on a side far from the heat sink, wherein each of the plurality of first holes overlaps a corresponding one of the plurality of cooling channels in the first direction, and each of the plurality of second holes overlaps a corresponding one of the plurality of hollows in the first direction, and each of the plurality of cooling channels may include two or more sub-channels.

In some embodiments, each of the plurality of cooling channels and each of the plurality of hollows may be alternately positioned in the second direction.

In some embodiments, each of the plurality of connectors may be inserted into a corresponding one of the plurality of first holes.

In some embodiments, each of the plurality of coupling members may be inserted into a corresponding one of the plurality of second holes.

In some embodiments, each of the plurality of coupling members may be inserted into a corresponding one of the plurality of hollows.

In some embodiments, a cross-sectional shape of each of the plurality of cooling channels may be rectangular or rounded rectangular.

In some embodiments, a cross-sectional shape of each of the plurality of hollows may be a circle or an ellipse.

In some embodiments, a cross-sectional area of each of the plurality of cooling channels may be larger than the cross-sectional area of each of the plurality of hollows.

In some embodiments, a cross-sectional area of each of the sub-channels may be larger than a cross-sectional area of each of the plurality of hollows.

In some embodiments, a gasket may be interposed between the heat sink and the block.

In some embodiments, each of the plurality of cooling channels may include two sub-channels.

In some embodiments, the two sub-channels are isolated from each other by a bulkhead, and the bulkhead may overlap the first hole in the first direction.

A battery pack according to some embodiments includes: a cooling device; and a battery cell assembly disposed on the cooling device and including a plurality of battery cells, wherein the cooling device includes: a heat sink including a plurality of cooling channels extending in a first direction and spaced apart from each other in a second direction perpendicular to the first direction and a plurality of hollows extending in the first direction and spaced apart from each other in the second direction; and a block coupled to the heat sink, wherein the block includes a plurality of first holes and a plurality of second holes on a side near the heat sink and on a side far from the heat sink, wherein each of the plurality of first holes overlaps a corresponding one of the plurality of cooling channels in the first direction, and each of the plurality of second holes overlaps a corresponding one of the plurality of hollows in the first direction, and each of the plurality of cooling channels may include two or more sub-channels.

In some embodiments, each of the plurality of cooling channels and each of the plurality of hollows are alternately positioned in the second direction, wherein each of the plurality of connectors is inserted into a corresponding one of the plurality of first holes, wherein each of the plurality of screws may be inserted into a corresponding one of the plurality of second holes and a corresponding one of the plurality of hollows.

In some embodiments, a cross-sectional area of each of the sub-channels may be larger than a cross-sectional area of each of the plurality of hollows.

### [Advantageous Effects]

Some embodiments of the present disclosure can rapidly cool a battery. Accordingly, the stability of the battery can be enhanced, and rapid charging of the battery can be enabled.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is an exploded perspective view schematically showing a cooling device according to some embodiments.
FIG. 2 is a perspective view schematically showing a cooling device according to some embodiments.
FIG. 3 is a perspective view showing a simplified representation of a heat sink that may be included in the cooling device according to some embodiments.
FIG. 4 is a top perspective view schematically showing a cooling device according to some embodiments.
FIG. 5 is a cross-sectional view taken along the section line A-A' of FIG. 4.
FIG. 6 is an exploded perspective view schematically showing a cooling device according to other embodiments.
FIG. 7 is a perspective view schematically showing a battery pack according to some embodiments.
FIG. 8 is a perspective view schematically showing an interior of the battery pack according to some embodiments.

### [Best Mode for Carrying out the Disclosure]

The terms and words used herein shall not be interpreted as limited to their conventional or dictionary meanings, but shall be interpreted in a meaning consistent with the technical concept of the present disclosure, based on the Principe that the inventor may appropriately define the meaning of terms and words to describe his own invention in the best possible manner.

In this specification, terms such as "include" or "have" are intended to specify the presence of the features, numbers, steps, operations, components, parts, or combinations thereof described herein, and should not be understood as precluding the presence or possibility of adding one or more other features, numbers, steps, operations, components, parts, or combinations thereof. Furthermore, when a layer, film, region, plate, or similar part is described as being "on" another part, this includes not only being "directly above" the other part but also cases where another part exists between them. Conversely, when a layer, film, region, plate, or similar part is described as being "under" another part, this includes not only being "directly below" the other part but also cases where another part exists between them.

The embodiments and drawings are merely examples of the present disclosure and do not represent all the technical ideas of the present disclosure; therefore, it should be understood that various equivalents and modifications may exist that can replace them.

In describing the present disclosure, detailed explanations of known configurations or functions are omitted where such descriptions are deemed to obscure the essence of the present disclosure.

The drawings are provided to more fully explain the present disclosure to those skilled in the art. Therefore, the shapes, sizes, and numbers of components in the drawings may be exaggerated, omitted, or shown schematically for clearer explanation. The shapes, sizes, proportions, and numbers of components in the drawings do not necessarily fully reflect the actual shapes, sizes, proportions, and numbers of the components.

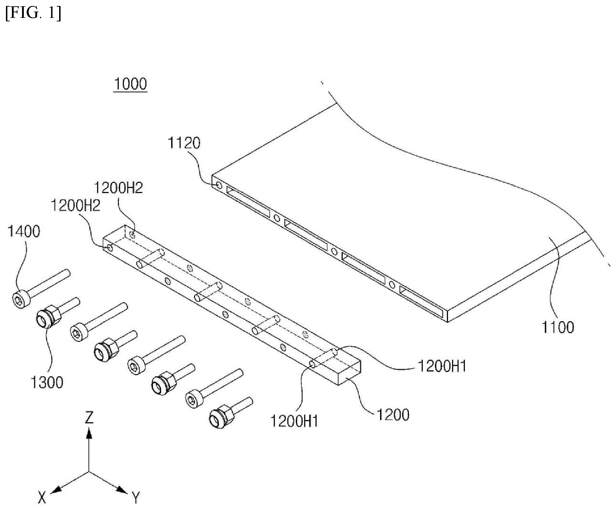

For convenience of description, this specification uses a three-dimensional Cartesian coordinate system to describe the position of components, the shape of components, and the relationships between components. The X-axis, Y-axis, and Z-axis are shown in FIGS. 1 through 7. In this specification, the "X direction" refers to a direction parallel to the X-axis. In this specification, the "Y direction" refers to a direction parallel to the Y-axis. In this specification, the "Z direction" refers to a direction parallel to the Z-axis.

### (First embodiment)

FIG. 1 is a simplified exploded perspective view showing a cooling device according to some embodiments.

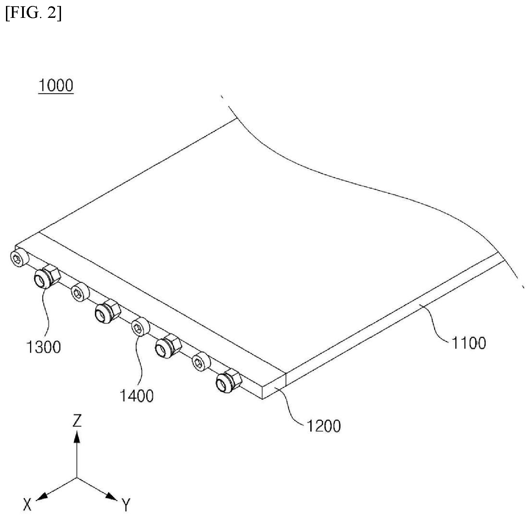

FIG. 2 is a perspective view schematically showing a cooling device according to some embodiments.

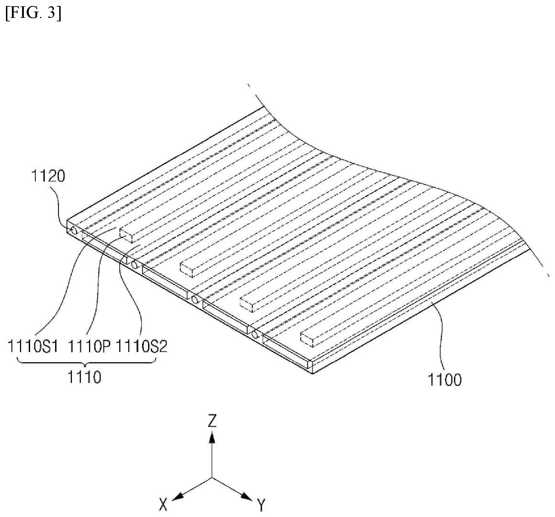

FIG. 3 is a perspective view schematically showing a heat sink that may be included in the cooling device according to some embodiments.

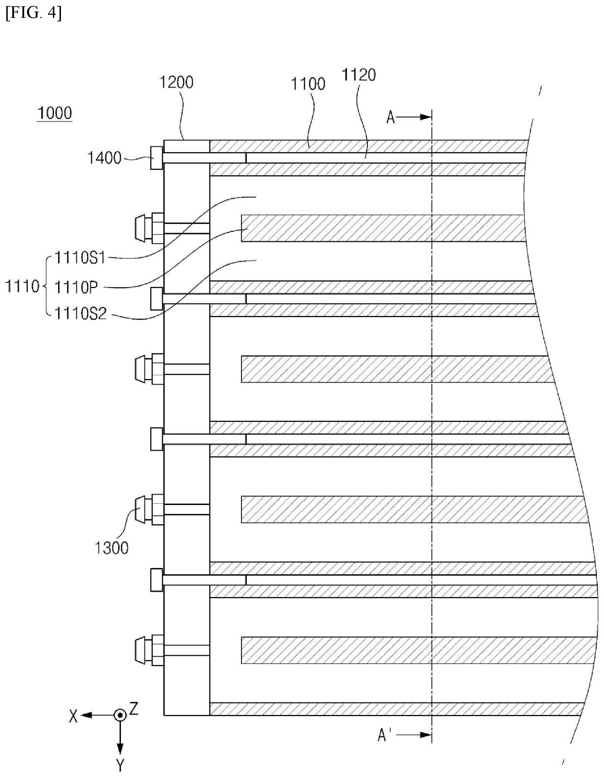

FIG. 4 is a top perspective view schematically showing a cooling device according to some embodiments.

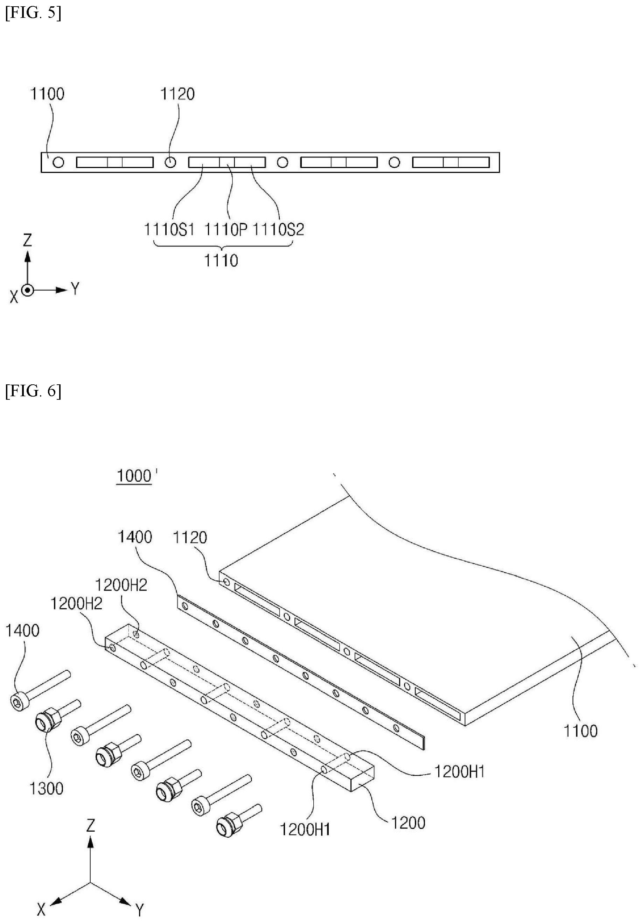

FIG. 5 is a cross-sectional view taken along section line A-A' of FIG. 4.

Referring to FIGS. 1 and 2, in some embodiments, the cooling device 1000 may include a heat sink 1100, a block 1200, a plurality of connectors 1300, and a plurality of coupling members 1400.

The heat sink 1100 may be part of a housing that accommodates a heat source (e.g., a plurality of battery cells). The heat sink 1100 may be a support plate configured to support the heat source (e.g., a plurality of battery cells). The heat sink 1100 may be a lid configured to cover the upper part of the heat source (e.g., a plurality of battery cells).

The heat sink 1100 may be manufactured via an extrusion process. The heat sink 1100 may have a seamless structure. The heat sink 1100 may have a plurality of hollows formed therein. The cross-sectional shape of each of the plurality of hollows may be substantially identical to the cross-sectional shape of the discharged port of the die from which each hollow is discharged. Some of the plurality of hollows may be utilized as cooling channels. That is, those among the plurality of hollows utilized as cooling channels may be referred to as cooling channels, while those not utilized as cooling channels may be referred to as hollows.

The cooling channels can provide a path for a cooling fluid to flow. The cooling fluid can absorb heat from a heat source (e.g., a plurality of battery cells) and lower the temperature of the heat source (e.g., a plurality of battery cells). The hollows may provide space into which a plurality of coupling members can be inserted.

Referring to FIGS. 1 and 3 to 5, in some embodiments, the heat sink 1100 may include a plurality of cooling channels 1110 and a plurality of hollows 1120. The plurality of cooling channels 1110 may extend in the X direction. The plurality of hollows 1120 may extend in the X direction. Each of the plurality of cooling channels 1110 may be positioned at a predetermined distance apart from each other in the Y direction. Each of the plurality of hollows 1120 may be positioned at a predetermined distance apart from each other in the Y direction. Each of the plurality of cooling channels 1110 and each of the plurality of hollows 1120 may be alternately positioned in the Y direction. Although FIG. 1 and FIGS. 3 to 5 show hollows 1120 positioned at both ends of the heat sink 1100, this is merely illustrative. Cooling channels 1110 may be positioned at both ends of the heat sink 1100. A hollow 1120 may be positioned at one end of the heat sink 1100, and a cooling channel 1110 may be positioned at the other end.

In some embodiments, each of the plurality of cooling channels 1110 may include two or more sub-channels. The two or more sub-channels may branch from the cooling channel 1110. The two or more sub-channels may converge into the cooling channel 1110. The two or more sub-channels may be isolated from each other by bulkheads. The bulkhead may enhance the durability of the heat sink 1100. Each of the two or more sub-channels may extend in the X direction. The bulkhead may extend in the X direction. Each of the two or more sub-channels and the bulkhead may be alternately positioned in the Y direction.

The sub-channels and bulkhead enable the majority of the internal space of the heat sink 1100 to be utilized as cooling channels while maintaining the durability of the heat sink at an appropriate level. The heat sink 1100 generally has a length (X-direction length) and width (Y-direction length) that are larger than its height (Z-direction length). Therefore, the hollows located inside the heat sink 1100 also generally have a length (X-direction length) and width (Y-direction length) that are larger than their height (Z-direction length). To utilize a large portion of the internal space of the heat sink 1100 as cooling channels, forming large-volume hollows within the heat sink 1100 and utilizing these hollows as cooling channels can be considered. That is, forming hollows with large widths (Y-direction length) inside the heat sink 1100 and utilizing these hollows as cooling channels is possible. However, if the length (X-direction length) and width (Y-direction length) of such a hollow are too large relative to its height (Z-direction length), the durability of the heat sink 1100 may be reduced. Therefore, bulkheads need to be installed inside the hollow with a large width (Y-direction length).

Referring to FIGS. 3 through 5, in some embodiments, each of the plurality of cooling channels 1110 may include two sub-channels 1110S1, 1110S2. The two sub-channels 1110S1, 1110S2 may be isolated from each other by a bulkhead 1110P. The two sub-channels 1110S1, 1110S2 may not overlap with the first hole 1200H1 in the X direction. The bulkhead 1110P may overlap with the first hole 1200H1 in the X direction.

Referring to FIG. 5, in some embodiments, the cross-sectional shape of each of the plurality of cooling channels 1110 may be rectangular or rounded rectangular. In some embodiments, the cross-sectional shape of each of the plurality of hollows 1120 may be circular or elliptical. In some embodiments, the cross-sectional area of each of the plurality of cooling channels 1110 may be larger than the cross-sectional area of each of the plurality of hollows 1120. In some embodiments, the cross-sectional area of each of two or more sub-channels 1110S1, 1110S2 may be larger than the cross-sectional area of each of the plurality of hollows 1120.

Referring to FIGS. 1, 2, and 4, in some embodiments, the block 1200 may be coupled to the heat sink 1100. The block 1200 may provide a path for the cooling fluid to flow into a plurality of cooling channels 1110. The block 1200 may provide a path for the cooling fluid to flow out from the plurality of cooling channels 1110. In some embodiments, the block 1200 may include a plurality of first holes 1200H1 and a plurality of second holes 1200H2 on a side near the heat sink 1100 and on a side far from the heat sink 1100. In some embodiments, each of the plurality of first holes 1200H1 may overlap with a corresponding one of the plurality of cooling channels 1110 in the X direction. In some embodiments, each of the plurality of second holes 1200H2 may overlap with a corresponding one of the plurality of hollows 1120 in the X direction.

In some embodiments, each of the plurality of connectors 1300 may be inserted into a corresponding one of the plurality of first holes 1200H1. Each of the plurality of connectors 1300 may be connected to a corresponding one of the plurality of cooling channels 1110. Each of the plurality of connectors 1300 may be coupled to a corresponding one of the plurality of cooling ports (not shown). As a non-limiting example, each of the plurality of connectors 1300 may be inserted into and coupled to the interior of a corresponding one of the plurality of cooling ports (not shown). The plurality of cooling ports (not shown) may be connected to a cooling fluid storing part (not shown) via cooling hoses (not shown). Cooling fluid may be delivered from the cooling fluid storing part (not shown) through the cooling hose (not shown), the plurality of cooling ports (not shown), and the plurality of connectors 1300 in sequence to the plurality of cooling channels 1110, where it may branch into two or more sub-channels. Conversely, the cooling fluid may be merged from two or more sub-channels into the plurality of cooling channels 1110 and delivered to the cooling fluid storing part (not shown) by sequentially passing through the plurality of connectors 1300, the plurality of cooling ports (not shown), and the cooling hose (not shown).

In some embodiments, each of the plurality of coupling members 1400 may be inserted into a corresponding one of the plurality of second holes 1200H2. Each of the plurality of coupling members 1400 may be inserted into a corresponding one of the plurality of hollows 1120. As non-limiting examples, the plurality of coupling members 1400 may each be screws or bolts, etc.

### (Second embodiment)

For the second embodiment, only the parts differing from the first embodiment are described in detail, and descriptions of parts substantially identical to the first embodiment are omitted.

FIG. 6 is an exploded perspective view schematically showing a cooling device according to other embodiments.

Referring to FIG. 6, in other embodiments, the cooling device 1000' may include a heat sink 1100, a block 1200, a plurality of connectors 1300, a plurality of coupling members 1400, and a gasket 1500.

The gasket 1500 may be interposed between the heat sink 1100 and the block 1200. The gasket 1500 may prevent leakage of the cooling fluid. That is, the gasket 1500 may enable the block 1200 to be closely coupled to the heat sink 1100. The gasket 1500 may include a plurality of holes positioned to correspond with a plurality of first holes 1200H1 and a plurality of second holes 1200H2. The gasket 1500 may include a plurality of holes positioned to correspond with a plurality of cooling channels 1110 and a plurality of hollows 1120.

### (Third embodiment)

A battery pack according to some embodiments may include a cooling device and a battery cell assembly disposed on the cooling device and including a plurality of battery cells.

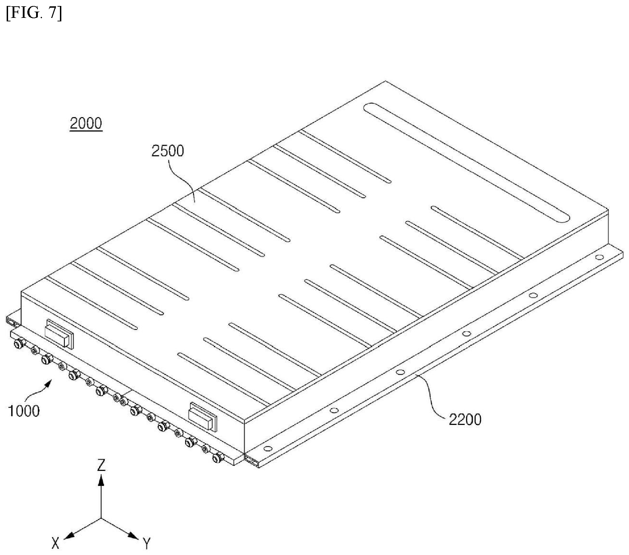

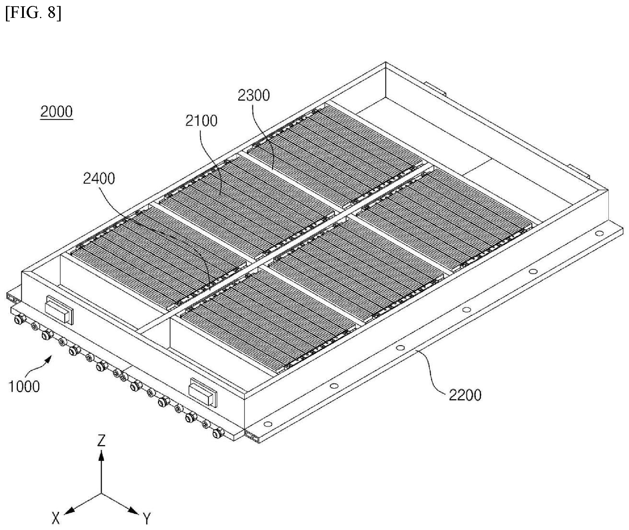

FIG. 7 is a perspective view schematically showing a battery pack according to some embodiments. FIG. 8 is a perspective view schematically showing the interior of a battery pack according to some embodiments.

Referring to FIGS. 7 and 8, in some embodiments, the battery pack 2000 may include a cooling device 1000, a battery cell assembly 2100, a side wall 2200, a first bulkhead 2300, a second bulkhead 2400, and a lid 2500.

The cooling device 1000 is substantially identical to that described above, so its description is omitted.

The battery cell assembly 2100 may be configured to store energy. The battery cell assembly 2100 may be a cell unit containing a plurality of battery cells. The battery cell assembly 2100 may not include a module frame. The assembly method of mounting cell units into a battery pack may be referred to as cell-to-pack. A battery pack assembled by cell-to-pack may be referred to as a module-less type battery pack. The battery cell assembly 2100 may be a battery module. A battery module may include a cell unit including a plurality of battery cells and a module frame into which the cell unit is mounted. The assembly method of mounting the cell unit into a module frame with at least one open side and mounting the module frame into a battery pack is also referred to as a cell-to-pack.

Each of the plurality of battery cells may be a secondary battery. Each of the plurality of battery cells may be a lithium secondary battery. Each of the plurality of battery cells may be any one of a lithium-ion battery, a lithium-ion polymer battery, a lithium metal battery, and a lithium polymer battery. The three-dimensional shape of each of the plurality of battery cells may be cylindrical, prismatic, or pouch-type. The three-dimensional shape of the battery cell refers to the three-dimensional shape of the battery case.

The side wall 2200 may be positioned on the cooling device 1000 to enclose the battery cell assembly 2100, the first bulkhead 2300, and the second bulkhead 2400. The side wall 2200 may provide a space where the battery cell assembly 2100, the first bulkhead 2300, and the second bulkhead 2400 are mounted together with the cooling device 1000. The first bulkhead 2300 may extend in the Y direction. The first bulkhead 2300 may be positioned between battery cell assemblies 2100. The second bulkhead 2400 may extend in the X direction. The second bulkhead 2400 may be positioned between the battery cell assemblies 2100. The lid 2500 may be coupled to the side wall 200 to cover the battery cell assemblies 2100, the side wall 2200, the first bulkhead 2300, and the second bulkhead 2400.

The battery pack 2000 according to some embodiments can rapidly cool the battery cell assembly 2100 because a cooling fluid flowing through a plurality of cooling channels included in the cooling device 1000 can absorb heat even if heat is generated in the battery cell assembly 2100. Accordingly, the battery pack 2000 according to some embodiments exhibits excellent stability and enables rapid charging.

The foregoing description is merely illustrative of the present disclosure. The scope of the present disclosure should be interpreted by the claims, and all technical ideas within the scope of the claims or within the scope of equivalents should be interpreted as falling within the scope of the present disclosure.

### [Description of Reference Numerals]

1000, 1000': COOLING DEVICE
1100: HEAT SINK
1110: COOLING CHANNEL
1110S1, 1110S2: SUB-CHANNEL
1110P: BULKHEAD
1120: HOLLOW
1200: BLOCK
1200H1: FIRST HOLE
1200H2: SECOND HOLE
1300: CONNECTOR
1400: COUPLING MEMBER
1500: GASKET
2000: BATTERY PACK
2100: BATTERY CELL ASSEMBLY
2200: SIDE WALL
2300: FIRST BULKHEAD
2400: SECOND BULKHEAD
2500: LID

## Claims

1. A cooling device comprising:
a heat sink comprising a plurality of cooling channels extending in a first direction and spaced apart from each other in a second direction perpendicular to the first direction and a plurality of hollows extending in the first direction and spaced apart from each other in the second direction; and
a block coupled to the heat sink, wherein
the block comprises a plurality of first holes and a plurality of second holes on a side near the heat sink and on a side far from the heat sink, wherein
each of the plurality of first holes overlaps a corresponding one of the plurality of cooling channels in the first direction, and
each of the plurality of second holes overlaps a corresponding one of the plurality of hollows in the first direction, and
each of the plurality of cooling channels comprises two or more sub-channels.

2. The cooling device of claim 1, wherein
each of the plurality of cooling channels and each of the plurality of hollows are alternately positioned in the second direction.

3. The cooling device of claim 1, wherein
each of the plurality of connectors is inserted into a corresponding one of the plurality of first holes.

4. The cooling device of claim 1, , wherein
each of the plurality of coupling members is inserted into a corresponding one of the plurality of second holes.

5. The cooling device of claim 4, wherein
each of the plurality of coupling members is inserted into a corresponding one of the plurality of hollows.

6. The cooling device of claim 1, wherein
a cross-sectional shape of each of the plurality of cooling channels is rectangular or rounded rectangular.

7. The cooling device of claim 1, wherein
a cross-sectional shape of each of the plurality of hollows is a circle or an ellipse.

8. The cooling device of claim 1, wherein
a cross-sectional area of each of the plurality of cooling channels is larger than a cross-sectional area of each of the plurality of hollows.

9. The cooling device of claim 1, wherein
a cross-sectional area of each of the sub-channels is larger than a cross-sectional area of each of the plurality of hollows.

10. The cooling device of claim 1, wherein
a gasket is interposed between the heat sink and the block.

11. The cooling device of claim 1, wherein
each of the plurality of cooling channels comprises two sub-channels.

12. The cooling device of claim 11, wherein
the two sub-channels are isolated from each other by a bulkhead, and
the bulkhead overlaps the first hole in the first direction.

13. A battery pack comprising:
a cooling device; and
a battery cell assembly disposed on the cooling device and comprising a plurality of battery cells, wherein
the cooling device comprises:
a heat sink comprising a plurality of cooling channels extending in a first direction and spaced apart from each other in a second direction perpendicular to the first direction and a plurality of hollows extending in the first direction and spaced apart from each other in the second direction; and
a block coupled to the heat sink, wherein
the block comprises a plurality of first holes and a plurality of second holes on a side near the heat sink and on a side far from the heat sink, wherein
each of the plurality of first holes overlaps a corresponding one of the plurality of cooling channels in the first direction, and
each of the plurality of second holes overlaps a corresponding one of the plurality of hollows in the first direction, and
each of the plurality of cooling channels comprises two or more sub-channels.

14. The battery pack of claim 13, wherein
each of the plurality of cooling channels and each of the plurality of hollows are alternately positioned in the second direction, wherein
each of the plurality of connectors is inserted into a corresponding one of the plurality of first holes, wherein
each of the plurality of screws is inserted into a corresponding one of the plurality of second holes and a corresponding one of the plurality of hollows.

15. The battery pack of claim 13, wherein
a cross-sectional area of each of the sub-channels is larger than a cross-sectional area of each of the plurality of hollows.
